(19) Europäisches Patentamt
European Patent Office
Office européen des brevets

(11) Veröffentlichungsnummer: **0 224 165**
**B1**

(12) # EUROPÄISCHE PATENTSCHRIFT

(45) Veröffentlichungstag der Patentschrift: **16.08.89**

(51) Int. Cl.⁴: **C 08 G 18/79**, C 09 D 3/72, C 07 D 251/34

(21) Anmeldenummer: **86115919.2**

(22) Anmeldetag: **17.11.86**

(54) **Verfahren zur Herstellung von Isocyanuratgruppen aufweisenden Polyisocyanaten und ihre Verwendung als Isocyanatkomponente in Polyurethanlacken.**

(30) Priorität: **27.11.85 DE 3541859**

(43) Veröffentlichungstag der Anmeldung: **03.06.87 Patentblatt 87/23**

(45) Bekanntmachung des Hinweises auf die Patenterteilung: **16.08.89 Patentblatt 89/33**

(84) Benannte Vertragsstaaten: **BE DE FR GB IT NL**

(56) Entgegenhaltungen: **EP-A- 0 047 452**

(73) Patentinhaber: **BAYER AG, D-5090 Leverkusen 1 Bayerwerk (DE)**

(72) Erfinder: **Halpaap, Reinhard, Dr., Kleinfeldschensweg 37 b, D-5000 Köln 91 (DE)**
Erfinder: **Pedain, Josef, Dr., Haferkamp 6, D-5000 Köln 80 (DE)**
Erfinder: **Kreuder, Hans-Joachim, Dr., Doerperhofstrasse 35, D-4150 Krefeld (DE)**
Erfinder: **Klein, Gerhard, Dr., von-Flotow-Strasse 7, D-4019 Monheim (DE)**
Erfinder: **Arlt, Dieter, Prof. Dr., Rybnikerstrasse 2, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein neues Verfahren zur Herstellung von Isocyanuratgruppen aufweisenden Polyisocyanaten auf Basis von Gemischen von bestimmten aliphatisch-cycloaliphatischen Diisocyanaten mit 1,6-Diisocyanatohexan und die Verwendung der Isocyanato-isocyanurate als Isocyanatkomponente in Polyurethanlacken.

Isocyanuratgruppen aufweisende (cyclo-)aliphatische Polyisocyanate sind als Lackpolyisocyanate technisch von größtem Interesse. Während niedermolekulare aliphatische Diisocyanate wegen ihrer noch relativ hohen Flüchtigkeit aufgrund ihrer toxikologischen Eigenschaften als solche in Lackbindemitteln nicht verwendet werden können, weisen Isocyanato-isocyanurate eine Reihe von Vorteilen auf. Es handelt sich um Oligomere mit einem niedrigen Dampfdruck, die weitgehend monomerenfrei sind. Sie haben eine Isocyanatfunktionalität $\geq 3$, so daß sich ein hoher Vernetzungsgrad erreichen läßt. Als aliphatische Polyisocyanate bewirken sie eine gute Lichtechtheit der aus ihnen erhaltenen Beschichtungen.

Bezüglich der Herstellung von Isocyanuratgruppen aufweisenden Polyisocyanaten sind die unterschiedlichsten Verfahren bekannt geworden. Diese bekannten Verfahren unterscheiden sich in der Regel durch die Auswahl der Trimerisierungskatalysatoren oder auch durch die Auswahl der bei der Trimerisierungsreaktion einzusetzenden Polyisocyanate (vgl. z.B. GB-PS 1 391 066, GP-PS 1 386 399, DE-OS 2 325 826, DE-OS 2 616 415, DE-OS 2 806 731, DE-OS 2 901 479, DE-OS 3 100 262, DE-OS 3 219 608, EP-PS 17 998, EP-OS 33 581, EP-OS 57 653, EP-OS 89 297, EP-PS 82 987 oder EP-OS 100 129).

Alle diese Verfahren haben einen wesentlichen prinzipiellen Nachteil. Um niedrigviskose oder in Lacklösungsmitteln gut lösliche Isocyanato-isocyanurate zu erhalten, muß die Trimerisierungsreaktion bereits bei einem relativ niedrigen Trimerisierungsgrad (Trimerisierungsgrad = Prozentsatz der in den Ausgangsisocyanaten vorliegenden Isocyanatgruppen, die unter Trimerisierung abreagieren) abgebrochen werden und zwecks Erzielung eines monomerenarmen Trimerisierungsprodukts eine in der Regel apparativ aufwendige Dünnschichtdestillation durchgeführt werden. Andernfalls würden neben den in der ersten Linie angestrebten, niedrigviskosen bzw. gut löslichen monomeren Isocyanuraten größere Mengen an Oligoisocyanuraten (Polyisocyanate mit Isocyanuratstruktur, die pro Molekül mehr als einen Isocyanuratring aufweisen) entstehen. Dies ist darauf zurückzuführen, daß die Isocyanatgruppen der Ausgangsdiisocyanate in der Regel eine gleichartige oder eine nur geringfügig unterschiedliche Reaktivität aufweisen, so daß nicht ausgeschlossen werden kann, daß beide Isocyanatgruppen der Ausgangsisocyanate unter Isocyanuratbildung abreagieren.

Gemäß einem eigenen nicht vorveröffentlichten älteren Vorschlag (EP-A 193 828) können Isocyanuratgruppen aufweisende Lackpolyisocyanate auf Basis der beim nachstehend näher beschriebenen erfindungsgemäßen Verfahren als Komponente a) eingesetzten aliphatisch-cycloaliphatischen Diisocyanate ohne vorzeitigen Abbruch der Trimerisierungsreaktion hergestellt werden, was auf die extrem unterschiedliche Reaktivität der Isocyanatgruppen dieser speziellen Diisocyanate zurückzuführen ist. Die gemäß der älteren Patentanmeldung erhältlichen Isocyanato-isocyanurate bestehen im wesentlichen aus den, den eingesetzten Diisocyanaten entsprechenden, Tris-isocyanato-isocyanuraten und stellen wertvolle Bindemittelkomponenten für Zweikomponenten-Polyurethanlacke dar.

Wie jetzt überraschend gefunden wurde, führt eine weitgehend anloge Trimerisierung von Gemischen der gemäß älterer Anmeldung einzusetzenden Diisocyanate mit 1,6-Diisocyanatohexan zu Isocyanato-isocyanuraten, die noch besser als die Verfahrensprodukte der älteren Anmeldung als Bindemittelkomponente in Zweikomponenten-Polyurethanlacken geeignet sind. Insbesondere weisen die mit den nachstehend näher beschriebenen erfindungsgemäßen Verfahrensprodukten als Isocyanatkomponente hergestellten Lackfilme eine höhere Elastizität als analoge Lacke auf Basis der Isocyanato-isocyanurate gemäß älterer Anmeldung auf.

Gegenstand der Erfindung ist ein Verfahren zur Herstellung von Isocyanuratgruppen aufweisenden Polyisocyanaten durch katalytische Trimerisierung eines Teils der Isocyanatgruppen von organischen Diisocyanaten und gegebenenfalls Abstoppung der Trimerisierungsreaktion beim jeweils gewünschten Trimerisierungsgrad durch Zugabe eines Katalysatorengifts und/oder durch thermische Desaktivierung des eingesetzten Katalysators, dadurch gekennzeichnet, daß man als Ausgangsdiisocyanate Gemische einsetzt von

a) aliphatisch-cycloaliphatischen Diisocyanaten mit einem NCO-Gehalt von 20 bis 50 Gew.-%, die eine sterisch ungehinderte, an ein primäres aliphatisches Kohlenstoffatom gebundene Isocyanatgruppe und eine sterisch gehinderte Isocyanatgruppe, die an ein tertiäres Kohlenstoffatom, das Teil eines cycloaliphatischen Ringsystems ist, aufweisen, mit

b) 1,6-Diisocyanatohexan (HDI) in einer Menge von bis zu 50 Mol-% HDI, bezogen auf die Gesamtmenge der Komponenten a) und b).

Gegenstand der Erfindung ist auch die Verwendung der nach diesem Verfahren erhältlichen, Isocyanuratgruppen aufweisenden Polyisocyanate, gegebenenfalls in mit Blockierungsmitteln für Isocyanatgruppen blockierter Form, als Isocyanatkomponente in Polyurethanlacken, insbesondere in hitzevernetzbaren Zweikomponenten-Polyurethan-Pulverlacken.

Beim erfindungsgemäßen Verfahren werden als Ausgangsdiisocyanate Gemische von a) bestimmten aliphatisch-cycloaliphatischen Diisocyanaten mit b) 1,6-Diisocyanatohexan eingesetzt. Die Menge des 1,6-Diisocyanatohexans (HDI) beträgt in diesen Ausgangsgemischen bis zu 50 Mol-%, vorzugsweise 5 bis 30 Mol-% und insbesondere 5 bis 20 Mol-% HDI, bezogen auf Gesamtgemisch der Komponenten a) und b).

Bei der Komponente a) handelt es sich um aliphatisch-cycloaliphatische Diisocyanate mit einem

NCO-Gehalt von 20 bis 50, vorzugsweise 30 bis 48 Gew.-%, die neben einer sterisch ungehinderten, aliphatisch gebundenen Isocyanatgruppe eine sterisch gehinderte, cycloaliphatisch gebundene Isocyanatgruppe der oben definierten Art aufweisen. Für das erfindungsgemäße Verfahren gut geeignete Ausgangsdiisocyanate a) sind solche der Formel (I) oder beliebige Gemische von solchen der Formel (I)

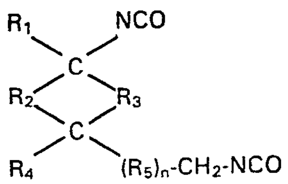

(I),

in welcher

$R_1$ für einen Alkylrest mit 1 bis 4 Kohlenstoffatomen, vorzugsweise einen Methylrest, steht,

$R_2$ und $R_3$ für gleiche oder verschiedene Reste stehen und jeweils einen zweiwertigen linearen oder verzweigten gesättigten Kohlenwasserstoffrest mit 1 bis 4, vorzugsweise 1 bis 3 Kohlenstoffatomen bedeuten, wobei die Summe der Kohlenstoffatome dieser Reste vorzugsweise 3 bis 6, insbesondere 4 oder 5, beträgt,

$R_4$ für Wasserstoff oder einen Alkylrest mit 1 bis 4 Kohlenstoffatomen, vorzugsweise für Wasserstoff oder einen Methylrest steht,

$R_5$ für einen zweiwertigen, linearen oder verzweigten, gesättigten aliphatischen Kohlenwasserstoffrest mit 1 bis 4, insbesondere 1 bis 3 Kohlenstoffatomen steht und

n für 0 oder 1 steht.

Besonders bevorzugte Diisocyanate a) sind z.B. 1-Isocyanato-1-methyl-4(3)-isocyanatomethylcyclohexan, welches im allgemeinen als Gemisch der 4- und 3-Isocyanatmethyl-Isomeren vorliegt, 1-Isocyanato-1-methyl-4-(4-isocyanatobut-2-yl)-cyclohexan, 1-Isocyanato-1,2,2-trimethyl-3-(2-isocyanatoethyl)-cyclopentan oder 1-Isocyanato-1,4(3)-dimethyl-4(3)-isocyanatomethylcyclohexan, welches im allgemeinen in Form eines 4-Methyl-4-isocyanatomethyl- und 3-Methyl-3-isocyanatomethyl-Isomerengemischs vorliegt. Geeignet sind jedoch auch z.B. 1-Isocyanato-1-n-butyl-3-(4-isocyanatobut)-1-yl)-cyclopentan, 1-Isocyanato-1-ethyl-4-n-butyl-4-(4-isocyanatobut-1-yl)-cyclohexan oder 1-Isocyanato-1,2-dimethyl-3-ethyl-3-isocyanatomethyl-cyclopentan.

Die Diisocyanate a) können beispielsweise hergestellt werden, indem man ungesättigte Amine der allgemeinen Formel II

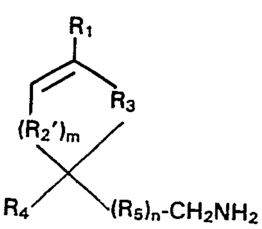

II

in welcher

$R_2'$ für einen zweiwertigen, gesättigten, linearen oder verzweigten Kohlenwasserstoffrest mit 1 bis 3 Kohlenstoffatomen steht,

m für 0 oder 1 steht und

$R_1$, $R_3$, $R_4$, $R_5$ und n die obengenannte Bedeutung haben,

oder Aminoalkohole der allgemeinen Formel III,

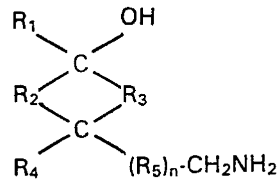

III

in welcher $R_1$, $R_2$, $R_3$, $R_4$, $R_5$ und n die oben angegebene Bedeutung haben, in einer Ritter-Reaktion mit Blausäure zu den Diaminen der allgemeinen Formel IV,

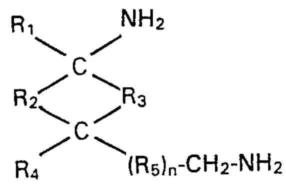

IV

umsetzt.

Aus den Diaminen der allgemeinen Formel IV erhält man durch Phosgenierung die Diisocyanate der allgemeinen Formel I.

Die umgesättigten Amine der allgemeinen Formel II sind entweder bekannt oder können aus Verbindungen der allgemeinen Formel V,

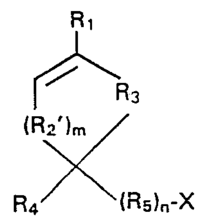

V

in welcher

X für -CHO oder -CN steht und

$R_1$, $R_2'$, $R_3$, $R_4$, $R_5$ und m und n die bereits obengenannte Bedeutung haben,

durch katalytische Hydrierung gewonnen werden.

Die Grundsubstanzen der allgemeinen Formel V können beispielsweise durch die bekannte Diels-Alder-Reaktion aus den entsprechenden, konjugierte Doppelbindungen aufweisenden Bisolefinen und ungesättigten Nitrilen oder Aldehyden oder durch Hydroformylierung der entsprechenden ungesättigten Kohlenwasserstoffe erhalten werden. So stellt beispielsweise das als Stellungsisomerengemisch vorliegende Diels-Alder-Addukt der Formeln VIa und VIb

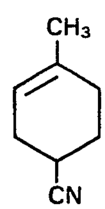

VIa

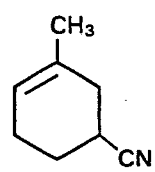

VIb

die Grundsubstanz des ebenfalls als Stellungsisomerengemisch vorliegenden 1-Isocyanato-1-methyl-4(3)-isocyanatomethylcyclohexans und die durch

Hydroformylierung von Limonen erhältliche Verbindung der Formel VII

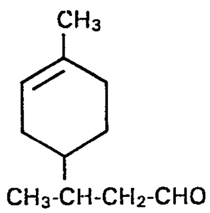

VII

die Grundsubstanz von 1-Isocyanato-1-methyl-4(4--isocyanatobut-2-yl)-cyclohexan dar. Die entsprechende Grundsubstanz von 1-Isocyanato-1,2,2-trimethyl-3-(2-isocyanatoethyl)-cyclopentan ist Campholenaldehyd der Formel VIII

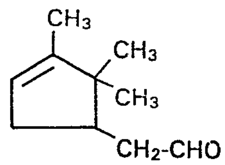

VIII

Weitere, der allgemeinen Formel V entsprechende, Grundsubstanzen können in Analogie zu diesen Ausführungen durch geeignete Auswahl der zu ihrer Herstellung benutzten Ausgangsmaterialien erhalten werden. Die Verbindungen VI-VIII sind im übrigen literaturbekannt [VI: Chem. Abstr. *71*, 112 475 F; VII: EP-A-0 008 459; VIII: Berichte *68B* 1430 (1935)].

Die Ritter-Reaktion der ungesättigten Amine der allgemeinen Formel II oder der Aminoalkohole der allgemeinen Formel III wird in Gegenwart einer starken Säure wie Schwefelsäure, Phosphorsäure, Alkyl- oder Arylsulfonsäuren oder Trifluoressigsäure durchgeführt. Bevorzugt wird Schwefelsäure verwendet. Der Wassergehalt der Säure kann zwischen 5 und 50% betragen, vorzugsweise jedoch 25 bis 35%. Pro Mol ungesättigtes Amin verwendet man 1 bis 3 Mol Säure, vorzugsweise 2 Mol. Bezogen auf das ungesättigte Amin der allgemeinen Formel II oder den Aminoalkohol der allgemeinen Formel III wird eine äquimolare Menge oder ein Überschuß von bis zu einem Mol Blausäure verwendet. In einer bevorzugten Verfahrensweise wird das ungesättigte Amin der allgemeinen Formel II zu der Säure gegeben und anschließend die Blausäure zugefügt. Die Temperatur wird während der Zugabe des Amins zwischen 0 und 25°C und während der Blausäurezugabe zwischen 10 und 50°C, vorzugsweise zwischen 30 und 45°C gehalten. Nach einer Reaktionszeit von 2 bis 10 Stunden, vorzugsweise 4 bis 6 Stunden wird das gebildete Formamid sauer hydrolysiert und das gebildete Diamin der allgemeinen Formel IV durch Neutralisation mit einer Base wie z.B. Natronlauge freigesetzt.

Das durch die Ritter-Reaktion gewonnene Diamin der allgemeinen Formel IV kann in an sich bekannter Weise phosgeniert werden. Dazu wird z.B. das Diamin in einem inerten Lösungsmititel mit Kohlendioxid bei Temperaturen zwischen 0 und 150°C, vorzugsweise zwischen 80 und 100°C gesättigt. Das entstandene Additionsprodukt wird dann bei 0 bis 200°C, vorzugsweise bei 120 bis 150°C, mit Phosgen zum Diisocyanat der allgemeinen Formel I umgesetzt. Es können alle indifferenten Lösungsmittel verwendet werden, deren Siedetemperatur für die Phosgenierung hoch genug liegt und die zum Diisocyanat eine ausreichende Siedepunktdifferenz aufweisen. Bevorzugt sind Chlorbenzole, Nitrobenzole, Xylole, Tetralin und Decalin.

In einer anderen Ausführungsform der Phosgenierung wird das Diamin in einem indifferenten Lösungsmittel zu einer Lösung von Phosgen in demselben Lösungsmittel bei Temperaturen zwischen −20°C und +50°C gegeben. Der Phosgenüberschuß, bezogen auf das Diamin, sollte 2 bis 10 Mol betragen, vorzugsweise 4 bis 6 Mol. Eine weitere Umsetzung des Additionsprodukts zum Diisocyanat erfolgt dann bei einer Temperatur von 20 bis 200°C, vorzugsweise zwischen 120 und 150°C.

Die auf diese Weise erhaltenen Diisocyanate a) weisen einen NCO-Gehalt von 20 bis 50, vorzugsweise von 30 bis 48 Gew.-% auf und stellen im allgemeinen Gemische von Stereoisomeren dar. Darüber hinaus kann es sich bei den Diisocyanaten, insbesondere im Falle der Verwendung von ungesättigten Nitrilen der allgemeinen Formel V als Grundsubstanz, die durch Diels-Alder-Reaktion erhalten worden sind, um Gemische von Stellungsisomeren handeln.

Für das erfindungsgemäße Verfahren geeignete Trimerisierungskatalysatoren sind alle beliebigen bislang für diesen Zweck eingesetzten Verbindungen, wie beispielsweise Phosphine der in DE-OS 1 934 763 beschriebenen Art, Alkaliphenolate der in GB-PS 1 391 066 oder GB-PS 1 386 399 beschriebenen Art, Aziridinderivate in Kombination mit tertiären Aminen der in DE-OS 2 325 826 beschriebenen Art, Mannichbasen, beispielsweise auf Basis von i-Nonylphenol, Formaldehyd und Dimethylamin der in US-PS 4 115 373 beschriebenen Art, quaternäre Ammoniumcarboxylate der in EP-OS 17 998 beschriebenen Art, quaternäre Ammoniumphenolate mit zwitterionischer Struktur der beispielsweise in US-PS 4 335 219 beschriebenen Art, Ammoniumphosphonate und -phosphate der in DE-OS 3 227 489 beschriebenen Art, Alkalicarboxylate der in DE-OS 3 219 608 beschriebenen Art oder basische Alkalimetallsalze in Verbindung mit Phasentransfer-Katalysatoren, wie sie von R. Richter, P. Müller und K. Wagner, Die Angewandte Makromolekulare Chemie *113*, 1 - 9 (1983) näher beschrieben werden, hier besonders bevorzugt Kaliumacetat komplexiert mit einem Polyethylenglykol, welches im Mittel 5 bis 6 Ethylenoxideinheiten enthält.

Besonders gut geeignet für das erfindungsgemäße Verfahren sind als Katalysatoren außerdem quaternäre Ammoniumhydroxide der allgemeinen Formel

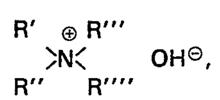

wie sie in den DE-OSen 2 806 731 und 2 901 479 beschrieben sind. Bevorzugt werden dabei quaternäre Ammoniumhydroxide der angegebenen Struktur, wobei die Reste R' bis R'''' für gleiche oder verschiedene Alkylgruppen mit 1 bis 20, vorzugsweise 1 bis 4, Kohlenstoffatomen stehen, die gegebenenfalls mit Hydroxylgruppen substituiert sind, und wobei zwei der genannten Reste R' bis R'''' auch zusammen mit dem Stickstoffatom und gegebenenfalls mit einem weiteren Stickstoff- oder Sauerstoffatom einen heterocyclischen Ring mit 3 bis 5 Kohlenstoffatomen bilden können, oder wobei die Reste R' bis R''' jeweils für Ethylenreste stehen, die zusammen mit dem quaternären Stickstoffatom und einem weiteren tertiärenStickstoffatom ein bicyclisches Triethylendiamin-Gerüst bilden, mit der Maßgabe, daß dann der Rest R'''' eine Hydroxyalkylgruppe mit 2 bis 4 Kohlenstoffatomen darstellt, wobei die Hydroxylgruppe vorzugsweise in 2-Stellung zum quaternären Stickstoffatom angeordnet ist, wobei in den genannten Fällen der hydroxylsubstituierte Rest oder die hydroxylsubstituierten Reste außer dem Hydroxyl-Substituenten auch beliebige andere Substituenten, insbesondere $C_1$ bis $C_4$-Alkoxy-Substituenten, aufweisen können. Die Darstellung der zuletzt beschriebenen Katalysatoren erfolgt in an sich bekannter Weise durch Umsetzung von tertiärem Amin mit Alkylenoxid in wässrig-alkoholischem Medium (vgl. US-PS 3 995 997, Kol. 2, Zeilen 19-44). Als tertiäre Amine sind dafür beispielsweise genannt: Trimethylamin, Tributylamin, 2-Dimethylaminoethanol, Triethanolamin, Dodecyldimethylamin, N,N-Dimethylcyclohexylamin, N-Methylpyrrolidin, N-Methylmorpholin oder 1,4-Diazabicyclo-[2,2,2]-octan; als Alkylenoxide können beispielsweise Ethylenoxid, Propylenoxid, 1,2-Butylenoxid, Styroloxid oder Methoxy-, Ethoxy- oder Phenoxypropylenoxid verwendet werden. Ganz besonders bevorzugte Katalysatoren aus dieser Gruppe sind N,N,N-Trimethyl-N-(2-hydroxyethyl)-ammoniumhydroxid und N,N,N-Trimethyl-N--(2-hydroxypropyl)-ammoniumhydroxid.

Die Trimerisierung der aus den Komponenten a) und b) bestehenden Ausgangsgemische kann zweckmäßigerweise in Abwesenheit, ohne weiteres jedoch auch in Gegenwart von gegenüber Isocyanatgruppen inerten Lösungsmitteln durchgeführt werden. Je nach Anwendungsbereich der erfindungsgemäßen Verfahrensprodukte können niedrig- bis mittelsiedende Lösungsmittel oder hochsiedende Lösungsmittel angewandt werden, wobei die Produkte bei Verwendung von Estern wie Ethylacetat oder Butylacetat, von Ketonen wie Aceton oder Butaron, Aromaten wie Toluol oder Xylol und Halogenkohlenwasserstoffen wie Methylenchlorid und Trichlorethylen im allgemeinen zunächst gelöst bleiben, während sie in Ethern wie Diisopropylether oder Alkanen wie Cyclohexan, Petrolether oder Ligroin in der Regel eine zweite Phase bilden oder ausfallen.

Die Trimerisierungskatalysatoren werden im allgemeinen in Mengen von 0,005 - 5 Gew.-%, vorzugsweise 0,01 - 2 Gew.-%, bezogen auf eingesetztes Diisocyanat eingesetzt. Wird z.B. ein bevorzugter Katalysator wie N,N,N-Trimethyl-N-(2-hydroxypropyl)-ammoniumhydroxid verwendet, so sind Mengen von 0,05 - 1 Gew.-%, bevorzugt von 0,07 bis 0,7 Gew.-%, bezogen auf Ausgangsdiisocyanat, im allgemeinen ausreichend. Die Katalysatoren können in reiner Form oder als Lösung eingesetzt werden. Als Lösungsmittel eignen sich je nach Art des Katalysators z.B. die bereits genannten gegenüber Isocyanatgruppen inerten Lösungsmittel, ebenso auch Dimethylformamid oder Dimethylsulfoxid. Bei der Mitverwendung von Carbidsäurederivate-bildenden Hydroxyverbindungen als Cokatalysatoren ist es von Vorteil, diese gleichzeitig als Katalysatorlösungsmittel zu verwenden. Dafür eignen sich z.B. Methanol, Ethanol, Isopropanol, 2-Ethylhexanol oder Glykole wie 1,2-Dihydroxyethan, 1,2-Dihydroxypropan, 1,3- und 1,4-Dihydroxybutan, 1,6- und 2,5-Dihydroxyhexan, 2-Ethyl-1,3-dihydroxyhexan oder 2,2,4-Trimethyl-1,3-dihydroxypentan.

Die Mitverwendung von Cokatalysatoren ist beim erfindungsgemäßen Verfahren möglich, aber nicht erforderlich. Als Cokatalysatoren eignen sich im Prinzip alle Substanzen, von denen eine polymerisierende Wirkung auf Isocyanate bekannt ist und wie sie beispielsweise in der DE-OS 2 806 731 beschrieben sind. Die Cokatalysatoren werden gegebenenfalls gegenüber den verwendeten Trimerisierungskatalysatoren (bezogen auf das Gewicht) unterschüssig eingesetzt; eine Ausnahme bilden die beschriebenen Hydroxyverbindungen, die gleichzeitig als Carbidsäurederivate bildende Cokatalysatoren und als Katalysatorlösungsmittel fungieren und im Überschuß gegenüber dem Katalysator verwendet werden können.

Die zur Trimerisierung erforderliche Reaktionstemperatur liegt bei dem erfindungsgemäßen Verfahren im allgemeinen bei 20 - 200°C, bevorzugt bei 40 bis 160°C, besonders bevorzugt bei 40 - 120°C. In Abwesenheit von inerten Lösungsmitteln wird besonders bevorzugt bei 60 - 120°C gearbeitet.

Die Durchführung des erfindungsgemäßen Verfahrens kann z.B. in der nachfolgend beschriebenen Weise erfolgen:

Das Ausgangsgemisch aus den Komponenten a) und b) wird unter Feuchtigkeitsausschluß und gegebenenfalls unter Inertgas in einem geeigneten Rührgefäß vorgelegt und z.B. mit gleichen Teilen eines gegenüber Isocyanatgruppen inerten Lösungsmittels wie z.B. Toluol, Butylacetat, Diisopropylether oder Cyclohexan vermischt. Nun wird bei z.B. 60°C mit dem erforderlichen Katalysator oder der Katalysatorlösung versetzt, wobei augenblicklich die Trimerisierung beginnt und durch die exotherme Reaktion angezeigt wird. Man hält z.B. das Reaktionsgemisch aus den Komponenten a) und b), insbesondere aus a) 1-Isocyanato-1-methyl-4-(3)-isocyanato-methylcyclohexan oder aus a) 1-Isocyanato-1,4(3)-dimethyl--4(3)-isocyanatomethylcyclohexan und b) HDI, bei beispielsweise 80°C und verfolgt den Fortlauf der Reaktion durch NCO-Gehaltstitration. Die Reaktion kann dann beim jeweils gewünschten Trimerisierungsgrad abgebrochen werden. Beispielsweise kann die Beendigung der Trimerisierungsreaktion bei einem Trimerisierungsgrad von > 50% bis 80%, insbesondere von 52,5 bis 70%, d.h. wenn der Gehalt an Isocyanatgruppen des Reaktionssatzes auf einen Wert von < 50% bis 20%, insbesondere von 47,5 bis 30%, des Ausgangswerts abgefallen ist, je nach gewähltem Mengenverhältnis der Komponenten a) und b), erfolgen.

Da das als Komponente b) eingesetzte 1,6-Diisocyanatohexan eine vergleichsweise deutlich höhere Reaktivität im Sinne der Trimerisierungsreaktion als die Komponente a) aufweist, wird das HDI im allgemeinen vollständig durch Umsetzung beider Isocyanatgruppen in die erfindungsgemäßen Verfahrensprodukte eingebaut. Falls daher der Abbruch der Trimerisierungsreaktion bei einem Trimerisierungsgrad erfolgt, bei welchem die Isocyanatgruppen der Komponente b) vollständig und die Isocyanatgruppen der Komponente a) zu mindestens 50% abreagiert haben — dies entspricht beispielsweise bei Verwendung eines Gemischs von a) und b) im Molverhältnis 80 : 20 einem Trimerisierungsgrad von 60% — enthält das Verfahrensprodukt im allgemeinen insgesamt unter 2, vorzugsweise unter 1 Gew.-% an freien monomeren Diisocyanaten a) und b).

Der Abbruch der Trimerisierungsreaktion kann beispielsweise durch Zugabe eines Katalysatorengifts der in den obengenannten Literaturstellen beispielhaft genannten Art, beispielsweise bei Verwendung von basischen Katalysatoren durch Zugabe einer der Katalysatormenge mindestens äquivalenten Menge eines Säurechlorids wie Benzoylchlorid erfolgen. Bei Verwendung von Hitze-labilen Katalysatoren, beispielsweise von quaternären Ammoniumhydroxiden der obengenannten Art, kann auch auf eine Vernichtung des Katalysators durch Zugabe eines Katalysatorengifts verzichtet werden, da sich diese Katalysatoren im Lauf der Reaktion selbst zersetzen. Im Falle der Verwendung derartiger Katalysatoren wird die Katalysatorenmenge und die Reaktionstemperatur vorzugsweise so gewählt, daß der sich kontinuierlich zersetzende Katalysator bei Erreichen des genannten Trimerisierungsgrads verbraucht, d.h. zersetzt ist. Die hierzu erforderliche Menge an Katalysator bzw. die hierzu erforderliche Reaktionstemperatur kann in einem orientierenden Vorversuch ermittelt werden. Es ist auch möglich, zunächst eine geringere Menge eines Hitze-sensiblen Katalysators einzusetzen, als zum Erreichen des angestrebten Trimerisierungsgrads erforderlich ist, und die Umsetzung im Verlauf der Trimerisierungsreaktion durch weitere portionsweise Zugabe von Katalysator nachzukatalysieren, wobei die nachträglich zugesetzte Menge an Katalysator so bemessen wird, daß bei Erreichen des angestrebten Trimerisierungsgrads die Gesamtmenge an Katalysator verbraucht ist. Bei Verwendung von unpolaren Lösungsmitteln wie beispielsweise Toluol ist auch die Verwendung von suspendierten Katalysatoren möglich, die bei Erreichen des angestrebten Trimerisierungsgrads durch Abfiltrieren aus dem Reaktionsgemisch entfernt werden. Grundsätzlich kann jedoch gesagt werden, daß aufgrund der selektiven Reaktivität der Isocyanatgruppen der Komponente a) und aufgrund des Umstands, daß das 1,6-Diisocyanatohexan wegen seiner höheren Reaktivität praktisch vollständig in die Verfahrensprodukte eingebaut wird, die Frage der Vernichtung bzw. Entfernung des Katalysators beim angestrebten Trimerisierungsgrad weit weniger kritisch ist als bei den bekannten Verfahren des Standes der Technik, wo weit mehr als beim erfindungsgemäßen Verfahren die Möglichkeit gegeben ist, daß alle Isocyanatgruppen des Ausgangsdiisocyanats unter Trimerisierung abreagieren. So kommt die Reaktion oft auch ohne Vernichtung oder Entfernung des Katalysators wegen der Reaktionsträgheit der an das tertiäre Kohlenstoffatom gebundenen Isocyanatgruppen des Ausgangsdiisocyanats a) nach vollständigem Einbau der Komponente b) durch Reaktion beider Isocyanatgruppen und nach Trimerisierung der aliphatisch gebundenen Isocyanatgruppe der Komponente a) von selbst zum Stillstand.

Die Aufarbeitung des Reaktionsgemischs kann, gegebenenfalls nach vorheriger Abtrennung unlöslicher Katalysatorbestandteile, je nach vorheriger Reaktionsführung oder je nach Einsatzgebiet der verwendeten Isocyanate in verschiedener Art erfolgen. So ist es z.B. vorteilhaft möglich, ein in Lösung hergestelltes Isocyanatoisocyanurat ohne jeden Reinigungsschritt, insbesondere ohne Dünnschichtdestillation, bei einem Monomerengehalt < 1 Gew.-% direkt als Lackrohstoff weiterzuverwenden. Ebenso ist es z.B. möglich, ein in Substanz trimerisiertes Gemisch aus a) 1-Isocyanato-1-methyl-(4(3)-isocyanatomethylcyclohexan mit b) HDI, das nach dem Abkühlen als Festharz anfällt, direkt als monomerenarme Lackisocyanatkomponente weiterzuverarbeiten. Vorteilhaft kann aber auch z.B. bei der Herstellung eines Isocyanurats aus a) 1-Isocyanato-1-methyl-4-(3)-isocyanatomethylcyclohexan und b) HDI ein Lösungsmittelgemisch gewählt werden. z.B. Diisopropylether/Petrolether, in welchem das Produkt als kristallines, weißes Pulver während des Abkühlvorgangs ausfällt und abfiltriert werden kann. Man kann auch z.B. nach vollständigem Umsatz der aliphatisch gebundenen Isocyanatgruppe der Komponente a) und beider Isocyanatgruppen der Komponente b) das bei der Trimerisierung verwendete Lösungsmittel durch Destillation entfernen.

Bei den erfindungsgemäßen Verfahrensprodukten handelt es sich um Isocyanato-isocyanurate, die im allgemeinen einen NCO-Gehalt von 10 bis 21 Gew.-% aufweisen, und die bei Raumtemperatur feste Harze mit einem im allgemeinen unter 120°C liegenden Schmelzbereich darstellen. Es handelt sich bei den erfindungsgemäßen Verfahrensprodukten im allgemeinen um Gemische von überwiegend Triisocyanato-monoisocyanuraten und Tetraisocyanato-bisisocyanuraten mit höheren, mehr als zwei Isocyanuratringe aufweisenden Homologen.

Die erfindungsgemäßen Verfahrensprodukte stellen wertvolle Ausgangsmaterialien zur Herstellung von Polyurethankunststoffen nach dem Isocyanat-Polyadditionsverfahren, insbesondere zur Herstellung von Ein- oder Zweikomponenten-Polyurethanlacken dar.

Bevorzugte Reaktionspartner für die erfindungsgemäßen, gegebenenfalls in blockierter Form vorliegenden Verfahrensprodukte bei der Herstellung von Polyurethanlacken sind die in der Polyurethanlacktechnik an sich bekannten Polyhydroxypolyester und -ether, Polyhydroxypolyacrylate und gegebenenfalls niedermolekularen, mehrwertigen Alkohole. Auch Polyamine, insbesondere in blockierter Form, z.B. als Polyketimine oder Oxazolidine, sind denkbare Reaktionspartner für die erfindungsgemäßen Verfahrensprodukte. Die Mengenverhältnisse, in welchen die erfindungsgemäßen, gegebenenfalls

blockierten Verfahrensprodukte und die genannten Reaktionspartner bei der Herstellung von Polyurethanlacken umgesetzt werden, werden im allgemeinen so gewählt, daß auf eine (gegebenenfalls blockierte) Isocyanatgruppe 0,8 - 3, vorzugsweise 0,9 - 1,1, Hydroxy-, Amino- und/oder Carboxylgruppen entfallen.

Zur Beschleunigung der Aushärtung können in bekannter Weise die in der Isocyanatchemie üblichen Katalysatoren verwendet werden, wie z.B. tert. Amine wie Triethylamin, Pyridin, Methylpiridin, Benzyldimethylamin, N,N-Dimethylaminocyclohexan, N-Methylpiperidin, Pentamethyldiethylentriamin, 1,4-Diazabicyclo-[2,2,2]-octan oder N,N'-Dimethylpiperazin, Metallsalze wie Eisen(III)-chlorid, Zinkchlorid, Zink-2-ethylcaproat, Zinn(II)-ethylcaproat, Dibutylzinn(IV)-dilaurat oder Molybdänglykolat.

Die erfindungsgemäßen Verfahrensprodukte können auch als wertvolle Ausgangsmaterialien für Zweikomponenten-Polyurethan-Einbrennlacke dienen. Sie können dazu in mit den an sich bekannten Blockierungsmitteln blockierter Form eingesetzt werden. Besonders vorteilhaft ist jedoch aufgrund der Reaktionsträgheit der tertiär gebundenen Isocyanatgruppen der erfindungsgemäßen Verfahrensprodukte ihre mögliche Anwendung in Zweikomponenten-Einbrennlacken ohne vorherige Verkappung der Isocyanatgruppen mit Blockierungsmitteln.

Damit entfällt bei solchen Systemen der Verfahrensschritt der Blockierung, und es erweist sich als ganz besonders günstig, daß während des Einbrennvorgangs kein Blockierungsmittel als sogenannter Abspalter freigesetzt wird. Falls jedoch eine Blockierung der NCO-Gruppen gewünscht wird, so kann in an sich bekannter Weise verfahren werden. Das Polyisocyanat wird mit geeigneten Blockierungsmitteln ganz oder teilweise blockiert, vorzugsweise bei erhöhter Temperatur (z.B. 40 - 160°C), gegebenenfalls in Gegenwart eines geeigneten Katalysators, wie z.B. tert. Aminen oder Metallsalzen der bereits beispielhaft genannten Art.

Geeignete Blockierungsmittel sind beispielsweise: Monophenole wie Phenol, die Kresole, die Trimethylphenole, die tert. Butylphenole; tertiäre Alkohole wie tert.-Butanol, tert.-Amylalkohol, Dimethylphenylcarbinol; leicht Enole bildende Verbindungen wie Acetessigester, Acetylaceton, Malonsäurederivate wie Malonsäurediethylester; sekundäre aromatische Amine wie N-Methylanilin, die N-Methyltoluidine, N-Phenyltoluidin, N-Phenylxylidin; Imide wie Succinimid; Lactame wie ε-Caprolactam, δ-Valerolactam; Oxime wie Butanonoxim, Cyclohexanonoxim; Mercaptane wie Methylmercaptan, Ethylmercaptan, Butylmercaptan, 2-Mecaptobenzthioazol, α-Naphthylmercaptan, Dodecylmercaptan oder Triazole wie 1H-1,2,4-Triazol.

Zur Herstellung der Lackbindemittel werden, gegebenenfalls blockiertes, Polyisocyanat, polyfunktioneller Reaktionspartner, Katalysator und gegebenenfalls die üblichen Zusätze, wie z.B. Pigmente, Farbstoffe, Füllstoffe und Verlaufmittel miteinander auf einem üblichen Mischaggregat, wie z.B. auf einer Sandmühle entweder mit oder ohne Lösungs- und Verdünnungsmittel gut vermischt und homogenisiert.

Die Anstrich- und Überzugsmittel können in Lösung oder aus der Schmelze, oder in fester Form nach den üblichen Methoden wie z.B. Streichen, Rollen, Gießen, Spritzen, dem Wirbelsinterverfahren oder dem elektrostatischen Pulversprühverfahren auf den zu beschichtenden Gegenstand aufgebracht werden.

Die die erfindungsgemäß erhältlichen Polyisocyanate enthaltenden Lacke ergeben Filme, die überraschend gut auf metallischem Untergrund haften, besonders lichtecht, wärmefarbstabil und sehr abriebfest sind. Darüber hinaus zeichnen sie sich durch große Härte, Elastizität, sehr gute Chemikalienbeständigkeit, hohen Glanz, ausgezeichnete Wetterbeständigkeit und gute Pigmentierbarkeit aus.

Die folgenden Beispiele erläutern die Erfindung. Alle Prozentangaben betreffen Gewichtsprozente. Alle Zahlenangaben vor den Siedetemperatur-Bereichen beziehen sich auf den während der Destillation vorliegenden Druck, ausgedrückt in «mbar».

*Beispiele*

In den folgenden Beispielen werden folgende Ausgangsmaterialien eingesetzt:

*Diisocyanat I* (1-Isocyanato-1-methyl-4(3)-isocyanato-methylcyclohexan)

a) Herstellung von 1-Amino-1-methyl-4(3)-aminomethylcyclohexan

605 g 4(5)-Cyano-1-methylcyclohexen werden in einem Rührautoklaven in 500 ml Ammoniak gelöst und bei 90°C und einem Wasserstoffdruck von 100 bar über 40 g Raney-Nickel-Eisen hydriert. Nach dem Abdampfen des Ammoniaks wird vom Katalysator abfiltriert und im Vakuum destilliert. Man erhält 550 g (88%) 4(5)-Aminomethyl-1-methylcyclohexen, $Kp_{10}$ 78 bis 80°C. Das Gewichtsverhältnis der 4- und 5-Isomeren liegt bei ca. 80 : 20.

Bei 50°C tropft man gleichzeitig 327 g dieses ungesättigten Amins und 78 g Blausäure zu 675 g 80% Schwefelsäure, rührt 3 h bei 50°C nach, tropft bei 20 - 90°C 1320 g 50% Natronlauge hinzu, erhitzt 3 h zum Rückfluß, gibt 800 ml 2-Methyl-1-propanol hinzu, trennt die organische Phase ab und destilliert im Vakuum. Man erhält 331 g (89%) 1-Amino-1-methyl-4(3)-Aminomethylcyclohexan, $Kp_{10}$ 95 bis 105°C.

b) Herstellung von 1-Isocyanato-1-methyl-4(3)-isocyanatomethylcyclohexan

Zu einer Lösung von 800 g Phosgen in 3,3 l Chlorbenzol tropft man bei 0 - 20°C eine Lösung von 213 g 1-Amino-1-methyl-4(3)-aminomethylcyclohexan in 3,3 l Chlorbenzol, erwärmt unter Durchleiten von Phosgen in 2 h auf 90°C, phosgeniert 3 h bei 90°C und 2 h unter Rückfluß, bläst das Phosgen mit Stickstoff aus und destilliert im Vakuum. Man erhält 265 g (91%) 1-Isocyanato-1-methyl-4(3)-isocyanatomethylcyclohexan, $Kp_{0,1}$ 98 - 103°C. Gewichtsverhältnis der 4- bzw. 3-Isomeren ca. 80 : 20.

*Diisocyanat II* (1-Isocyanato-1,4(3)-dimethyl--4(3)-isocyanatomethylcyclohexan)

a) Herstellung von 1-Amino-1,4(3)-dimethyl-4(3)--aminomethylcyclohexan

600 g 4(5)-Cyano-1,4(5)-dimethylcyclohexen werden in einem Rührautoklaven in 300 ml flüssigem Ammoniak gelöst und bei 90°C und einem Wasserstoffdruck von 100 bar über 40 g Raney-Nickel-Eisen hydriert. Nach dem Abdampfen des Ammoniaks wird vom Katalysator abfiltriert und im Vakuum destilliert. Man erhält 540 g (87%) 4(5)-Aminomethyl--1,4(5)-dimethylcyclohexen, $Kp_{10}$ 75 - 78°C. Das Gewichtsverhältnis der 4- und 5-Isomeren liegt bei ca. 70 : 30.

Bei 40°C tropft man gleichzeitig 520 g dieses ungesättigten Amins und 111 g Blausäure zu 1240 g 80% Schwefelsäure, rührt 3 h bei 40°C nach, tropft bei 20 - 90°C 1800 g 45% Natronlauge zu, erhitzt 3 h zum Rückfluß, gibt 700 ml Chlorbenzol zu, trennt die organische Phase bei 80°C ab und destilliert im Vakuum. Man erhält 493 g (85%) 1-Amino--1,4(3)-dimethyl-4(3)-aminomethylcyclohexan, $Kp_{10}$ 90 bis 105°C.

b) Herstellung von 1-Isocyanato-1,4(3)-dimethyl--4(3)-isocyanatomethylcyclohexan

Zu einer Lösung von 1300 g Phosgen in 4,5 Chlorbenzol tropft man bei 0 - 20°C eine Lösung von 312 g des oben beschriebenen Diamins in 2 l Chlorbenzol, erwärmt unter Durchleiten von Phosgen in 2 h auf 90°C, phosgeniert 3 h bei 90°C und 2 h unter Rückfluß, bläst das Phosgen mit Stickstoff aus und destilliert im Vakuum. Man erhält 337 g (81%) 1-Isocyanato-1,4(3)-dimethyl-4(3)-isocyanatomethylcyclohexan, $Kp_{0,1}$ 88 - 90°C. Gewichtsverhältnis der 4- bzw. 3-Isomeren ca. 70 : 30.

*Katalysator I*

10%ige Lösung von 2-Hydroxypropyl-trimethylammoniumhydroxid in 2-Ethyl-1,3-dihydroxyhexan/1,3-Dihydroxybutan (Gewichtsverhältnis der Lösungsmittel 4 : 1).

*Beispiel 1*

Eine Mischung aus 1746 g Diisocyanat I und 168 g 1,6-Diisocyanatohexan (Molverhältnis = 90 : 10) wird bei 50°C mit 40 ml Katalysatorlösung I versetzt. Die exotherme Reaktionsmischung wird zunächst durch Kühlen bei 60°C gehalten und später durch Heizen bei dieser Temperatur gehalten. Nach Erreichen eines NCO-Gehalts von 29% wird die Temperatur bei 80°C gehalten, bis nach 5 h ein NCO-Gehalt von 20,5% erreicht ist. Man rührt dann noch während 30 min bei 110°C nach und gießt das Reaktionsgemisch auf ein Blech. Nach Abkühlen auf Raumtemperatur liegt ein klares Festharz mit einem NCO-Gehalt von 18,6% (entsprechend einem Trimerisierungsgrad von 56,6%) und einem Schmelzbereich von 70 bis 80°C vor. Der Gehalt an monomerem Diisocyanat I liegt unter 1%, der Gehalt an monomerem 1,6-Diisocyanatohexan liegt unterhalb der Nachweisgrenze, d.h. unterhalb 0,03%.

*Beispiel 2*

1358 g Diisocyanat I und 504 g 1,5-Diisocyanatohexan (Molverhältnis = 70 : 30) werden bei 50°C mit 40 ml Katalysatorlösung I versetzt. Man hält das Reaktionsgemisch zunächst während 2 h bei 60°C bis zu einem NCO-Gehalt der Mischung von 26,1%; dann wird das Gemisch während 1,5 h bei 80°C gehalten, wonach sich ein NCO-Gehalt von 17,8% einstellt. Schließlich wird das Gemisch noch während 0,5 h bei 110°C nachgerührt und auf ein Blech gegossen. Nach Abkühlen auf Raumtemperatur liegt ein glasartig erstarrtes Festharz mit einem NCO-Gehalt von 15,1% (entsprechend einem Trimerisierungsgrad von 66,5%) und einem Schmelzbereich von 80 - 85°C vor. Der Gehalt des Umsetzungsprodukts an Diisocyanat I liegt unter 1%. Der Gehalt an 1,6-Diisocyanatohexan liegt unterhalb der Nachweisgrenze.

*Beispiel 3*

Eine Mischung aus 332,8 g Diisocyanat II und 67.2 g 1,6-Diisocyanatohexan (Molverhältnis = 80 : 20) wird bei 50°C mit 8 ml Katalysatorlösung II versetzt. Man hält das Reaktionsgemisch zunächst 3 h bei 60°C bis zu einem NCO-Gehalt von 28,2% und dann weitere 2 h bei 80°C bis zu einem NCO-Gehalt von 16,9%. Man rührt während 30 min bei 110°C nach, gießt auf ein Blech und erhält nach dem Abkühlen auf Raumtemperatur ein klares Festharz mit einem NCO-Gehalt von 16,0% (entsprechend einem Trimerisierungsgrad von 61,9%) und einem Schmelzbereich von 60 - 70°C.

*Beispiel 4* (Verwendung)

51 Gew.-Teile eines hydroxylgruppenhaltigen Polyesters aus 58,2 Gew.-Teilen Terephthalsäure, 33,3 Gew.-Teilen Neopentylglykol, 4,6 Gew.-Teilen 1,6-Dihydroxyhexan und 3,4 Gew.-Teilen Trimethylolpropan mit der OH-Zahl 50 und einem Hydroxyläquivalentgewicht von 1120, 9 Gew.-Teile des gemäß Beispiel 1 erhaltenen, Isocyanuratgruppen aufweisenden Polyisocyanats und 40 Gew.-Teile eines handelsüblichen Titandioxidpigments werden in einem Extruder bei ca. 120°C aufgeschmolzen und homogenisiert. Die Dosierung des Polyhydroxypolyesters und des Polyisocyanats erfolgt hierbei im Verhältnis der Äquivalentgewichte. Nach dem Erstarren der Schmelze wird das Produkt gemahlen und mittels einer elektrostatischen Sprüheinrichtung auf Prüfbleche appliziert und innerhalb 10 min bei 180°C ausgehärtet.

Bei einer Schichtdicke von 56 bis 58 µm werden folgende lacktechnische Eigenschaften gefunden:

*Glanz:* 91%
(Gardner, 60° Reflexionswinkel)

*Knickprobe:* 0
(0 = keine Veränderung, 2 = gerissen)

*Gitterschnitt:* GT 0/0
(DIN 53 151, 0 = kein Haftverlust, 4 = totaler Haftverlust, 1. Wert vor Tesaabriß, 2. Wert nach Tesaabriß)

*Erichsentiefung:* > 10 mm
(DIN 53 156)

*Impact (rev.):* 80 inch pound (92 cm/kg)
(ASTM D 2794, Erichsen Typ 304, Kugeldurchmesser 15,8 mm)

*Weißgrad:* 80,9, nach 20 min/220°C 70,7
(nach Berger/Elrephomat)

*Gelierzeit:* 140 sec/180°C
(DIN 55 990 Teil8, Punkt 5,1)

*Rieselfähigkeit:* rieselfähig bei 50°C
(DIN 55 990 Teil 7, 2 Wochen bei 45 und 50°C)

**Patentansprüche**

1. Verfahren zur Herstellung von Isocyanuratgruppen aufweisenden Polyisocyanaten durch katalytische Trimerisierung eines Teils der Isocyanatgruppen von organischen Diisocyanaten und gegebenenfalls Abstoppung der Trimerisierungsreaktion beim jeweils gewünschten Trimerisierungsgrad durch Zugabe eines Katalysatorengifts und/oder durch thermische Desaktivierung des eingesetzten Katalysators, dadurch gekennzeichnet, daß man als Ausgangsdiisocyanate Gemische einsetzt von

a) aliphatisch-cycloaliphatischen Diisocyanaten mit einem NCO-Gehalt von 20 bis 50 Gew.-%, die eine sterisch ungehinderte, an ein primäres aliphatisches Kohlenstoffatom gebundene Isocyanatgruppe und eine sterisch gehinderte Isocyanatgruppe, die an ein tertiäres Kohlenstoffatom, das Teil eines cycloaliphatischen Ringsystems ist, aufweisen, mit

b) 1,6-Diisocyanatohexan (HDI) in einer Menge von bis zu 50 Mol-% HDI, bezogen auf die Gesamtmenge der Komponenten a) und b).

2. Verfahren gemäß Anspruch 1, dadurch gekennzeichnet, daß man als Komponente a) Diisocyanate der Formel

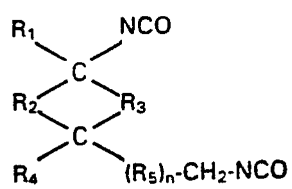

einsetzt, wobei

$R_1$ für einen Alkylrest mit 1 bis 4 Kohlenstoffatomen,

$R_2$ und $R_3$ für gleiche oder verschiedene, lineare oder verzweigte, zweiwertige gesättigte Kohlenwasserstoffreste mit 1 bis 4 Kohlenstoffatomen,

$R_4$ für Wasserstoff oder einen Alkylrest mit 1 bis 4 Kohlenstoffatomen,

$R_5$ für einen linearen oder verzweigten, gesättigten zweiwertigen Kohlenwasserstoffrest mit 1 bis 4 Kohlenstoffatomen und

n für 0 oder 1 stehen.

3. Verfahren gemäß Anspruch 1 und 2, dadurch gekennzeichnet, daß man die Komponente b) in einer Menge von 5 bis 30 Mol-% bezogen auf das Gesamtgemisch der Komponente a) und b) einsetzt.

4. Verfahren gemäß Anspruch 1 bis 3, dadurch gekennzeichnet, daß man die Trimerisierungsreaktion bei Erreichen eines Trimerisierungsgrads von mindestens 50% bezogen auf die Komponente a) abbricht.

5. Verwendung der gemäß Anspruch 1 bis 4 erhältlichen, Isocyanatgruppen aufweisenden Polyisocyanate gegebenenfalls in mit Blockierungsmitteln für Isocyanatgruppen blockierter Form, als Isocyanatkomponente in Polyurethanlacken.

6. Verwendung gemäß Anspruch 5 in Hitze-vernetzbaren Zweikomponenten-Polyurethan-Pulverlacken.

**Claims**

1. A process for the production of polyisocyanates containing isocyanurate groups by partial catalytic trimerization of the isocyanate groups of organic diisocyanates and, optionally, termination of the trimerization reaction at the particular degree of trimerization required by addition of a catalyst poison and/or thermal deactivation of the catalyst used, characterized in that the starting diisocyanates used are mixtures of

a) aliphatic-cycloaliphatic diisocyanates with an NCO content of from 20 to 50% by weight which contain a sterically unhindered isocyanate group attached to a primary aliphatic carbon atom and a sterically hindered isocyanate group attached to a tertiary carbon atom which is part of a cycloaliphatic ring system with

b) 1,6-diisocyanatohexane (HDI) in a quantity of up to 50 mol-% HDI, based on the total quantity of components a) and b).

2. A process as claimed in claim 1, characterized in that component a) is a diisocyanate corresponding to the following formula

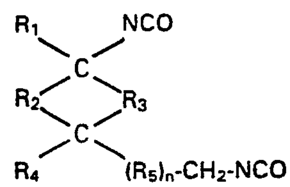

in which

$R_1$ is an alkyl radical containing 1 to 4 carbon atoms,

$R_2$ and $R_3$ may be the same or different and represent linear or branched, difunctional saturated hydrocarbon radicals containing 1 to 4 carbon atoms,

$R_4$ represents hydrogen or an alkyl radical containing 1 to 4 carbon atoms,

$R_5$ is a linear or branched, saturated difunctional hydrocarbon radical containing 1 to 4 carbon atoms and

n = 0 or 1.

3. A process as claimed in claims 1 and 2, characterized in that component b) is used in a quantity of from 5 to 30 mol-%, based on the total mixture of components a) and b).

4. A process as claimed in claims 1 to 3, characterized in that the trimerization reaction is terminated

at a degree of trimerization of at least 50%, based on component a).

5. The use of the polyisocyanates containing isocyanurate groups obtained by the process claimed in claims 1 to 4, optionally blocked by blocking agents for isocyanate groups, as isocyanate component in polyurethane lacquers.

6. The use claimed in claim 5 in heat-crosslinkable two-component polyurethane powder paints.

**Revendications**

1. Procédé de production de polyisocyanates porteurs de groupes isocyanurate par trimérisation catalytique d'une partie des groupes isocyanato de diisocyanates organiques et, le cas échéant, arrêt de la réaction de trimérisation au degré désiré de trimérisation par l'addition d'un poison du catalyseur et/ou par désactivation thermique du catalyseur utilisé, caractérisé en ce qu'on utilise comme diisocyanates de départ des mélanges

a) de diisocyanates aliphato-cycloaliphatiques ayant une teneur en groupes NCO de 20 à 50% en poids, qui présentent un groupe isocyanato à encombrement stérique, lié à un atome aliphatique primaire de carbone et un groupe isocyanato à encombrement stérique qui est lié à un atome tertiaire de carbone qui appartient à un système de noyau cycloaliphatique, avec

b) du 1,6-diisocyanatohexane (HDI) en une quantité allant jusqu'à 50 moles % de HDI, par rapport à la quantité totale des composants a)et b).

2. Procédé suivant la revendication 1, caractérisé en ce qu'on utilise comme composant a) des diisocyanates de formule

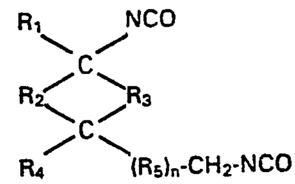

dans laquelle

$R_1$ représente un reste alkyle ayant 1 à 4 atomes de carbone,

$R_2$ et $R_3$ sont des restes d'hydrocarbures saturés linéaires ou ramifiés, identiques ou différents, ayant 1 à 4 atomes de carbone,

$R_4$ représente un atome d'hydrogène ou un reste alkyle ayant 1 à 4 atomes de carbone,

$R_5$ est un reste hydrocarboné divalent saturé linéaire ou ramifié ayant 1 à 4 atomes de carbone et

n a la valeur 0 ou 1.

3. Procédé suivant les revendications 1 et 2, caractérisé en ce qu'on utilise le composant b) en une quantité de 5 à 30 moles par rapport au mélange total des composants a) et b).

4. Procédé suivant les revendications 1 à 3, caractérisé en ce qu'on interrompt la réaction de trimérisation lorsqu'un degré de trimérisation d'au moins 50% par rapport au composant a) a été atteint.

5. Utilisation des polyisocyanates porteurs de groupes isocyanurate, obtenus suivant les revendications 1 à 4, le cas échéant sous la forme protégée avec des agents protecteurs pour groupes isocyanate, comme composant isocyanate dans des vernis de polyuréthanne.

6. Utilisation suivant la revendication 5, dans des vernis en poudre de polyuréthanne à deux composants réticulables par la chaleur.